# EUROPEAN PATENT SPECIFICATION

(11) **EP 1 207 125 B1**
(45) Date of publication and mention of the grant of the patent: **28.06.2006**
(21) Application number: 01126962.8
(22) Date of filing: 13.11.2001
(51) Int. Cl.: B65G 59/02, B25J 15/12, B65G 47/90

(54) **Pickup head for pallet unloading machines**
Greifkopf für Maschine zum Entladen von Paletten
Tête de préhension pour machines de déchargement de palettes

(30) Priority: 14.11.2000 IT BO000659
(43) Date of publication of application: 22.05.2002
(73) Proprietor: OMA S.r.l., 37069 Villafranca di Verona (IT)
(72) Inventor: Baldi, Giampietro, 37069 Villafranca di Verona (IT)
(74) Representative: Cerbaro, Elena

(56) References cited:
- DE-A- 2 107 318
- DE-A- 2 726 870
- DE-U- 29 917 844
- PATENT ABSTRACTS OF JAPAN vol. 016, no. 173 (M-1240), 24 April 1992 (1992-04-24) -& JP 04 016421 A (DAIDO STEEL CO LTD), 21 January 1992 (1992-01-21)

## Description

The present invention relates to a pickup head for pallet unloading machines.

As is known, in the packing machine industry, there are numerous types of pallet unloading machines for receiving a succession of "pallets of products" at the input, and supplying, at the output, a succession of individual products ready for supply to other machines.

The "pallets of products" are defined by a given number of layers of products, such as bottles, tubs, glass jars, tins, etc., stacked to form, when packed, a single, easy-to-carry block; and each layer of products on the pallet is defined by a given number of parallel, adjacent rows of individual products on a tray or supporting panel resting on the layer of products underneath. The rows of individual products may also be arranged in a five-spot pattern.

Most known pallet unloading machines comprise: a work platform on which the pallet for unloading is positioned; a product unloading surface alongside the work platform; and a pickup head, which moves over the work platform and unloading surface to pick a predetermined number of rows of products off the top of the pallet on the work platform, and to deposit the rows of products on to the unloading surface adjacent to the work platform.

To pick up the rows of products, the pickup head of pallet unloading machines is normally equipped with a number of gripping devices specially designed and sized according to the type of product being handled.

In the case of tubs, glass jars, tins and cup-shaped containers in general, the gripping devices are defined by a suction pump, and a number of suction cups arranged on a supporting frame to faithfully reproduce the spatial arrangement of the products in each or part of each layer on the pallet.

When moved over the top layer of products on the pallet, the pickup head positions each suction cup to rest on the bottom of a respective container; and the suction pump is connected to the suction cups so as to withdraw, on command, the air trapped inside each suction cup, which thus adheres to the bottom of the container. Each time it moves from the work platform to the product unloading surface, therefore, the pickup head picks a whole layer of products, or part of it, off the top of the stationary pallet on the work platform.

Unfortunately, pickup heads with gripping devices of the type described above are not altogether suitable for handling cup-shaped food containers : the suction cups gripping the individual containers, in fact, are made of plastic or rubber, i.e. of a material capable of absorbing and then releasing substances incompatible with the handling of food containers.

A further drawback of pickup heads of the above type is that they require a highly accurate, high-cost positioning system : each of the suction cups on the pickup head, in fact, must be positioned exactly in the center of the respective cup-shaped container, so as to adhere perfectly to the bottom of the container. DE 2 107 318 A discloses a pickup head comprising a bladder.

DE 27 26 870 A discloses a pickup head having all the features of the preamble of claim 1.

It is an object of the present invention to provide a pickup head for pallet unloading machines, designed to eliminate the aforementioned drawbacks.

According to the present invention, there is provided a pickup head for pallet unloading machines for automatically unloading a succession of pallets of cup-shaped containers, and supplying at the output a succession of individual cup-shaped containers ready for use by other machines according to claim 1.

A non-limiting embodiment of the present invention will be described by way of example with reference to the accompanying drawings, in which:
Figure 1 shows a front view, with parts removed for clarity, of a pallet unloading machine equipped with a pickup head in accordance with the teachings of the present invention;
Figures 2 and 3 show a front view and side view respectively of the Figure 1 pickup head;
Figure 4 shows a view in perspective of a component part of the Figure 2 and 3 pickup head.

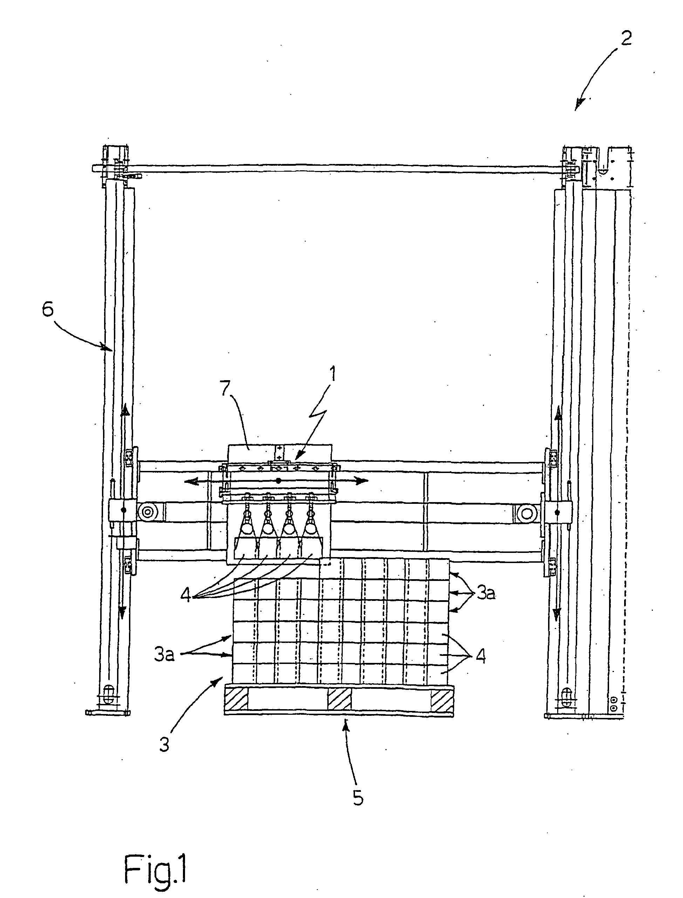

Number 1 in Figures 1, 2 and 3 indicates as a whole a pickup head, which is particularly suitable for use on a pallet unloading machine 2 for fully automatically unloading a succession of pallets 3 of cup-shaped containers, such as tubs, glass jars, tins, etc., and for supplying at the output a succession of individual cup-shaped containers 4 ready for use on other machines.

Like any other "pallet of products", pallets 3 of cup-shaped containers are defined by a compact, orderly group of individual cup-shaped containers 4, which is defined by a number of product layers 3a stacked to form, when packed, a single, easy-to-carry block. Each product layer 3a is in turn defined by a given number of product rows 3b arranged parallel and adjacent to one another and preferably, though not necessarily, in a five-spot pattern.

In the particular example shown, pallet 3 of cup-shaped containers 4 is defined by six superimposed product layers 3a, each of which is defined by ten product rows 3b arranged in a five-spot pattern and each comprising ten cup-shaped containers 4.

With reference to Figure 1, pallet unloading machine 2, in the example shown, comprises: a work platform 5 on which pallet 3 for unloading is positioned; a product unloading surface (not shown) alongside work platform 5; a supporting frame 6 astride work platform 5 and the unloading surface; and a head slide 7 fitted movably to frame 6 so as to move both horizontally and vertically over work platform 5 and the product unloading surface.

Pickup head 1 is designed to retain and release, on command, a predetermined number of product rows 3b forming any product layer 3a on pallet 3, and is fixed to head slide 7 so as to move over work platform 5 and the unloading surface, to pick a predetermined number of product rows 3b, on command, off the top of pallet 3 on work platform 5, and to deposit product rows 3b on to the product unloading surface alongside work platform 5.

With reference to Figures 1, 2 and 3, pickup head 1 comprises a horizontal supporting structure 8 fixed to head slide 7 so as to extend over work platform 5 and the product unloading surface (not shown); and a number of gripping devices 9 fixed to supporting structure 8 so as to face work platform 5 and the product unloading surface.

Gripping devices 9 are designed so as each to selectively retain a respective cup-shaped container 4, and are arranged on supporting structure 8 so as to faithfully reproduce the spatial arrangement of cup-shaped containers 4 in each or in part of each product layer 3a.

In other words, gripping devices 9 are arranged in parallel rows on supporting structure 8, so that each is aligned with a respective cup-shaped container 4 in product layer 3a when pickup head 1 is stationary over the top of pallet 3 on work platform 5.

It should be pointed out that the number and arrangement of gripping devices 9 on supporting structure 8 varies according to the number of product rows 3b to be removed simultaneously from the top product layer 3a on pallet 3. In fact, it is possible to remove a whole product layer 3a at a time, or a number of product rows 3b smaller than the total number of product rows 3b forming each product layer 3a.

In the particular example shown, gripping devices 9 are arranged in four rows, each comprising a number of gripping devices equal to the number of cup-shaped containers 4 forming any product row 3b - ten in the example shown.

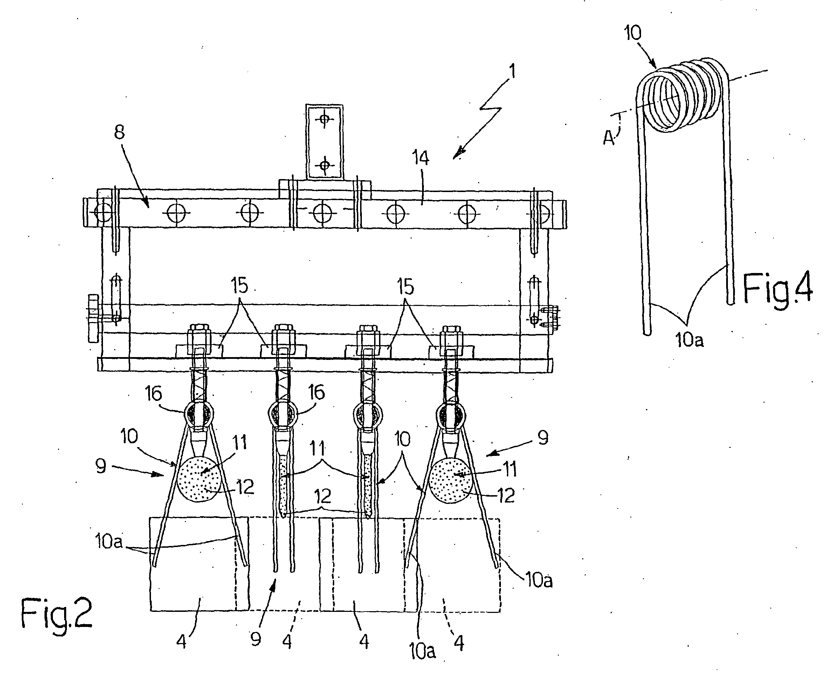

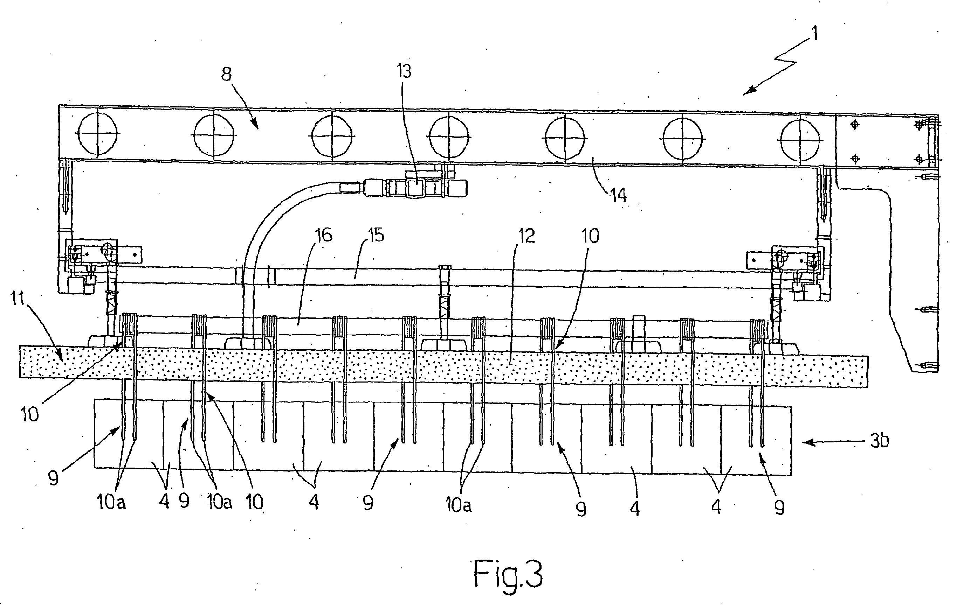

With reference to Figures 2 and 3, each gripping device 9 comprises a fork member 10 made of elastically deformable material, having two straight, substantially parallel prongs 10a, and suspended vertically from supporting structure 8 with the ends of prongs 10a facing downwards, i.e. towards work platform 5 and the product unloading surface, so as to be inserted inside a respective cup-shaped container 4 when pickup head 1 is stationary over the top of pallet 3 on work platform 5.

Gripping device 9 also comprises a parting device 11 for selectively parting the two prongs 10a of fork member 10, so as to rest the ends of the two prongs 10a against the inner surface of the cup-shaped container 4 aligned with gripping device 9, and so secure the cup-shaped container to supporting structure 8 of pickup head 1 (Figure 2).

It should be pointed out that fork member 10 is so formed as to return to its original configuration when parting device 11 is deactivated.

In the example shown, parting device 11 comprises a bladder 12 trapped between prongs 10a of fork member 10; and a controlled open-close solenoid valve 13 for regulating compressed-air flow to bladder 12 to expand bladder 12 in controlled manner and so part prongs 10a of fork member 10. Solenoid valve 13 is controlled by an electronic central control unit (not shown) of pallet unloading machine 2, so as to open and close fork member 10 of gripping device 9 on command.

With reference to Figures 2 and 3, it should be stressed that, as stated, gripping devices 9 are arranged in parallel rows, so that fork members 10 in the same row of gripping devices 9 are all aligned. It is therefore convenient to hang the fork members 10 in the same row of gripping devices 9 to a single element of supporting structure 8, and to use a single elongated bladder 12 to open all the fork members 10 in the row simultaneously.

In the example shown, therefore, supporting structure 8 comprises a top supporting bracket 14 fixed to head slide 7 to project over work platform 5 and the product unloading surface; and four horizontal cross members 15 fixed beneath top bracket 14 and parallel to one another and to the product rows 3b on pallet 3.

Horizontal cross members 15 each support a respective row of gripping devices 9, and are fixed to supporting bracket 14 so as to be easily removable, i.e. so that a skilled operator can quickly alter the spacing and number of horizontal cross members 15 fixed at one time beneath top bracket 14.

The fork members 10 in the same row of gripping devices 9 are all suspended astride a horizontal bar 16, in turn suspended from and parallel to horizontal cross member 15.

Bladder 12, on the other hand, is suspended directly from horizontal cross member 15, and extends parallel to and just below horizontal bar 16, so as to be interposed between the two prongs 10a of each fork member 10 suspended from horizontal bar 16.

With reference to Figures 2, 3 and 4, it should be pointed out that, in the example shown, each fork member 10 is defined by a metal (e.g. stainless steel) helical torsion spring, which comprises a central portion coiled about a given axis A, and two straight end portions extending parallel to and facing each other along two planes perpendicular to axis A. The two end portions of the helical spring define prongs 10a of fork member 10, and the central portion of the helical spring is so sized as to fit on to horizontal bar 16.

With reference to Figures 2 and 3, it should be pointed out that, in the example shown, bladders 12 of gripping devices 9 are each defined by a so-called "inflatable blade", i.e. an inflatable tubular element already widely used in the industry to grip rows of bottles by the neck. The "inflatable blade" is obviously a known component and therefore not described in detail.

Operation of pickup head 1, as described and illustrated above, is self-explanatory and therefore not described in detail.

The advantages of pickup head 1 are obvious. Cup-shaped containers 4 are brought into contact with exclusively metal elements, which cannot absorb or release substances of any sort, thus improving hygiene, especially in the case of cup-shaped containers 4 for food products.

Another advantage of pickup head 1 described above lies in gripping devices 9 being self-centering, so that the head positioning systems on the pallet unloading machine need not be as accurate as those currently used, thus greatly reducing the production cost of the machine. To grip a cup-shaped container 4, in fact, the two prongs 10a of fork member 10 need simply be inserted inside the container, without necessarily being aligned with the center of the container.

Another advantage of pickup head 1 is that it can adapt to cup-shaped containers 4 of different sizes, by virtue of fork members 10 adapting, within limits, to cup-shaped containers 4 of any shape. To grip a cup-shaped container 4, in fact, it is sufficient that fork member 10 be insertable inside the cup-shaped container 4, and that parting device 11 be able to part the two prongs 10a of fork member 10 so that they rest against the inner surface of the container.

Clearly, changes may be made to pickup head 1 as described and illustrated herein without, however, departing from the scope of the present invention as defined in the appended claims.

## Claims

1. A pickup head (1) for pallet unloading machines (2) for automatically unloading a succession of pallets (3) of cup-shaped containers (4), and supplying at the output a succession of individual cup-shaped containers (4) ready for use by other machines; the pickup head (1) comprising a supporting structure (8), and at least one gripping device (9) fixed to said supporting structure (8) so as to grip a respective cup-shaped container (4) on command; said at least one gripping device (9) comprising an elastically deformable fork member (10) having two side by side prongs (10a) which are insertable inside a cup-shaped container (4), and parting means (11) for parting on command the prongs (10a) of the fork member (10) so as to bring the prongs (10a) to rest against the inner surface of the cup-shaped container (4) and so secure the cup-shaped container to the supporting structure (8) of the pickup head (1); the pickup head (1) being **characterized in that** said elastically deformable fork member (10) is defined by a helical torsion spring (10), which comprises a central portion coiled about a given axis (A), and two end portions (10a) extending parallel to and facing each other, and ervssarise to said axis (A).

2. A pickup head as claimed in Claim 1, **characterized in that** said parting means comprise a bladder (12) interposed between the two prongs (10a) of said fork member (10); and valve means (13) for regulating compressed-air flow to said bladder (12), so as to expand the bladder (12) in controlled manner and so part the prongs (10a) of said fork member (10).

3. A pickup head as claimed in any one of the foregoing Claims, **characterized by** comprising a number of gripping devices (9), each for selectively retaining a cup-shaped container (4); said gripping devices (9) being arranged on said supporting structure (8) so as to reproduce the spatial arrangement of the products (4) in any, or in part of any product layer (3a) on said pallet (3).

4. A pickup head as claimed in Claim 3, **characterized in that** said gripping devices (9) are arranged in parallel rows on the supporting structure (8).

5. A pickup head as claimed in Claim 4, **characterized in that** the fork members (10) of the gripping devices (9) in the same row of gripping devices are aligned with one another, and are all carried by the same supporting element (16) of said supporting structure (8).

6. A pickup head as claimed in Claim 5, **characterized in that** said parting means (11) comprise a single elongated bladder (12) extending just below said supporting element (16) supporting the fork members (10), so as to be interposed between the two prongs (10a) of each fork member (10) suspended from the supporting element (16).

7. A pallet unloading machine (2), **characterized by** having at least one pickup head (1) as claimed in any one of Claims 1 to 6.

## Patentansprüche

1. Greifkopf (1) für Palettenentlademaschinen (2) zum automatischen Entladen einer Folge von Paletten (3) becherförmiger Behälter (4) und Zuführen einer Folge einzelner becherförmiger Behälter (4), die für die Verwendung durch andere Maschinen bereit sind, an der Ausgabe, wobei der Greifkopf (1) eine Stützstruktur (8) und mindestens eine Greifvorrichtung (9), die an der Stützstruktur (8) befestigt ist, um so einen jeweiligen becherförmigen Behälter (4) auf Kommando zu greifen, aufweist, wobei die mindestens eine Greifvorrichtung (9) ein elastisch verformbares Gabelteil (10) umfasst, das zwei nebeneinanderliegende Zinken (10a), die in einen becherförmigen Behälter (4) einführbar sind, und Trennmittel (11) aufweist, um so die Zinken (10a) des Gabelteils (10) auf Kommando zu trennen, um die Zinken (10a) gegen die innere Oberfläche des becherförmigen Behälters (4) zum Anliegen zu bringen und so den becherförmigen Behälter an der Stützstruktur (8) des Greifkopfes (1) zu befestigen, wobei der Greifkopf (1) **dadurch gekennzeichnet ist, dass** das elastisch verformbares Gabelteil (10) durch eine spiralförmige Torsionsfeder (10) definiert ist, die einen um eine gegebene Achse (A) gewickelten Mittelabschnitt und zwei Endabschnitte (10a) aufweist, die sich parallel und einander gegenüber und quer zu der Achse (A) erstrecken.

2. Greifkopf gemäß Anspruch 1, **dadurch gekennzeichnet, dass** das Trennmittel eine Blase (12), die zwischen die beiden Zinken (10a) besagten Gabelteils (10) liegt, und Ventilmittel (13) zum Regulieren des Druckluftflusses zu der Blase (12) umfassen, um so die Blase (12) in kontrollierter Weise auszudehnen und somit die Zinken (10a) des Gabelteils (10) zu trennen.

3. Greifkopf gemäß einem der vorangehenden Ansprüche, **dadurch gekennzeichnet, dass** er eine Anzahl von Greifvorrichtungen (9) umfasst, jede zum selektiven Festhalten eines becherförmigen Behälters (4), wobei die Greifvorrichtungen (9) auf der Stützstruktur (8) angeordnet sind, um so die räumliche Anordnung der Produkte (4) in jeder oder in einem Teil jeder Produktschicht (3a) auf der Palette (3) nachzubilden.

4. Greifkopf gemäß Anspruch 3, **dadurch gekennzeichnet, dass** die Greifvorrichtungen (9) in parallelen Reihen auf der Stützstruktur (8) angeordnet sind.

5. Greifkopf gemäß Anspruch 4, **dadurch gekennzeichnet, dass** die Gabelteile (10) der Greifvorrichtungen (9) in derselben Reihe von Greifvorrichtungen in Relation zueinander ausgerichtet sind, und dass alle durch dasselbe Stützelement (16) der Stützstruktur (8) getragen werden.

6. Greifkopf gemäß Anspruch 5, **dadurch gekennzeichnet, dass** die Trennmittel (11) eine einzelne längliche Blase (12) umfassen, die sich knapp unter dem Stützelement (16), das die Gabelteile (10) stützt, erstreckt, so dass sie zwischen den beiden Zinken (10a) von jedem von dem Stützelement (16) herunterhängenden Gabelteil (10) liegt.

7. Palettenentlademaschine (2), **dadurch gekennzeichnet, dass** sie mindestens einen Greifkopf (1) gemäß einem der Ansprüche 1 bis 6 aufweist.

## Revendications

1. Tête de ramassage (1) pour déchargeur de palettes (2) destinée à décharger automatiquement une succession de palettes (3) de conteneurs bombés (4), et destinée à fournir à la sortie une succession de conteneurs bombés individuels (4) prêts à l'emploi pour d'autres machines ; la tête de ramassage (1) comprenant une structure de support (8) et au moins un dispositif de préhension (9) fixé sur ladite structure de support (8) de façon à saisir un conteneur bombé donné (4) sur commande ; ledit au moins un dispositif de préhension (9) comprenant un élément en fourche déformable élastiquement (10) ayant deux griffes côte à côte (10a) qui peuvent être insérées à l'intérieur d'un conteneur bombé (4), et des moyens de séparation (11) destinés à séparer sur commande les griffes (10a) de l'élément en fourche (10) de façon à faire reposer les griffes (10a) contre la surface intérieure du conteneur bombé (4) et de fixer ainsi le conteneur bombé sur la structure de support (8) de la tête de ramassage (1) ; la tête de ramassage (1) étant **caractérisée en ce que** ledit élément en fourche déformable élastiquement (10) est défini par un ressort de tension hélicoïdal (10), qui comprend une partie centrale enroulée autour d'un axe donné (A), et deux parties d'extrémité (10a) s'étendant parallèlement et se faisant face l'une à l'autre, et en travers dudit axe (A).

2. Tête de ramassage selon la revendication 1, **caractérisée en ce que** lesdits moyens de séparation comprennent un diaphragme (12) interposé entre les deux griffes (10a) dudit élément en fourche (10) ; et des moyens de soupape (13) destinés à réguler le débit d'air comprimé jusqu'au dit diaphragme (12), de façon à allonger le diaphragme (12) de façon contrôlée et de séparer ainsi les griffes (10a) dudit élément en fourche (10).

3. Tête de ramassage selon l'une quelconque des revendications précédentes, **caractérisée en ce qu'**elle comprend un nombre de dispositifs de préhension (9), chacun pour retenir de façon sélective un conteneur bombé (4) ; lesdits dispositifs de préhension (9) étant agencés sur ladite structure de support (8) de façon à reproduire l'agencement spatial des produits (4) dans l'une quelconque ou dans une partie de l'une quelconque couche de produit (3a) sur ladite palette (3).

4. Tête de ramassage selon la revendication 3, **caractérisée en ce que** lesdits dispositifs de préhension (9) sont agencés en rangées parallèles sur la structure de support (8).

5. Tête de ramassage selon la revendication 4, **caractérisée en ce que** les éléments en fourche (10) des dispositifs de préhension (9) dans la même rangée des dispositifs de préhension sont alignés les uns avec les autres, et sont tous supportés par le même élément de support (16) de ladite structure de support (8).

6. Tête de ramassage selon la revendication 5, **caractérisée en ce que** lesdits moyens de séparation (11) comprennent un seul diaphragme allongé (12) s'étendant juste en dessous dudit élément de support (16) supportant les éléments en fourche (10), de façon à être interposé entre les deux griffes (10a) de chaque élément en fourche (10) suspendu depuis l'élément de support (16).

7. Déchargeur de palettes (2), **caractérisé en ce qu'**il comprend au moins une tête de ramassage (1) selon l'une quelconque des revendications 1 à 6.
